# EUROPEAN PATENT APPLICATION

(11) **EP 4 178 170 A1**
(43) Date of publication of application: **10.05.2023**
(21) Application number: 22190520.1
(22) Date of filing: 16.08.2022
(51) Int. Cl.: H04L 41/082, H04L 41/084

(54) **METHOD AND APPARATUS FOR UPDATING INSTANCE CONFIGURATION, STORAGE MEDIUM, AND PROGRAM PRODUCT**

(30) Priority: 25.11.2021 CN 202111415040
(71) Applicant: BEIJING BAIDU NETCOM SCIENCE AND TECHNOLOGY CO. LTD., 100085 Beijing (CN)
(72) Inventor: WANG, Chenfei, Beijing, 100085 (CN)
(74) Representative: Nederlandsch Octrooibureau

(57) **Abstract**

The present disclosure provides a method for updating an instance configuration, a related apparatus for updating an instance configuration, and a computer program product, and relates to the technical field of media cloud such as content delivery networks and cluster configuration. The method includes: determining, for a plurality of servers included in a node, a representative server based on consistent hash; determining, for a plurality of instances running on the servers, a representative-of-server instance based on the consistent hash, and determining the representative-of-server instance of the representative server as a representative-of-node instance; delivering a first control parameter to a common server instance, where the first control parameter is used for instructing to initiate a configuration updating request only to a representative-of-server instance of a same server; and delivering a second control parameter to the representative-of-server instance, where the second control parameter is used for instructing to initiate a configuration updating request only to the representative-of-node instance. This method transfers the initiating object to greatly reduce the number of requests processed by the console, and the smaller number of processed requests will also shorten the waiting time for processing and the time required for the new configuration to take effect.

## Description

### TECHNICAL FIELD

The present disclosure relates to the technical field of data processing, specifically relates to the technical field of media cloud such as content delivery networks and cluster configuration, and more specifically relates to a method and apparatus for updating an instance configuration, an electronic device, a computer readable storage medium, and a computer program product.

### BACKGROUND

A CDN (Content Delivery Network) enables a user to acquire desired nearby contents depending on edge servers deployed in various regions by functional modules such as load balancing, content delivery, and scheduling modules of a control center, thereby reducing network congestion, and improving a response speed and a hit rate for a user access. Each node that constitutes the CDN usually includes a plurality of servers, and in order to improve a performance utilization of servers, a plurality of service instances are usually created using a virtualization technology based on server resources.

For each instance, in view of service flexibility requirements, many service parameters in the instance are not hard-coded, but are determined by dynamic configuration delivery. In view of needs for guaranteeing a latest configuration of each instance, the latest configuration will be irregularly pulled by the instance from the control center (also referred to as console), i.e., an object to which the each instance initiates a configuration request is the control center.

### SUMMARY

Embodiments of the present disclosure present a method and apparatus for updating an instance configuration, an electronic device, a computer readable storage medium, and a computer program product.

In a first aspect, an embodiment of the present disclosure presents a method for updating an instance configuration, including: determining, for a plurality of servers included in a node, a representative server based on consistent hash; determining, for a plurality of instances running on each server, a representative-of-server instance based on the consistent hash, and determining the representative-of-server instance of the representative server as a representative-of-node instance; delivering a first control parameter to a common server instance that is different from the representative-of-server instance; where the first control parameter is used for instructing the common server instance to initiate a configuration updating request only to a representative-of-server instance of a same server; and delivering a second control parameter to the representative-of-server instance; where the second control parameter is used for instructing the representative-of-server instance to initiate a configuration updating request only to the representative-of-node instance.

In a second aspect, an embodiment of the present disclosure presents an apparatus for updating an instance configuration, including: a representative server determining unit configured to determine, for a plurality of servers included in a node, a representative server based on consistent hash; a representative instance determining unit configured to determine, for a plurality of instances running on each server, a representative-of-server instance based on the consistent hash, and determine the representative-of-server instance of the representative server as a representative-of-node instance; a first control parameter delivering unit configured to deliver a first control parameter to a common server instance that is different from the representative-of-server instance; where the first control parameter is used for instructing the common server instance to initiate a configuration updating request only to a representative-of-server instance of a same server; and a second control parameter delivering unit configured to deliver a second control parameter to the representative-of-server instance; where the second control parameter is used for instructing the representative-of-server instance to initiate a configuration updating request only to the representative-of-node instance.

In a third aspect, an embodiment of the present disclosure provides an electronic device, including: at least one processor; and a memory communicatively connected to the at least one processor; where the memory stores instructions executable by the at least one processor, and the instructions are executed by the at least one processor, such that the at least one processor can implement the method for updating an instance configuration according to any one implementation in the first aspect.

In a fourth aspect, an embodiment of the present disclosure provides a non-transitory computer readable storage medium storing computer instructions, where the computer instructions are used for causing a computer to implement the method for updating an instance configuration according to any one implementation in the first aspect.

In a fifth aspect, an embodiment of the present disclosure provides a computer program product including a computer program, where the computer program, when executed by a processor, can implement the method for updating an instance configuration according to any one implementation in the first aspect.

In the embodiments of the present disclosure, it is possible to select a representative server from a plurality of servers included in each CDN node based on consistent hash, select a representative-of-server instance and a representative-of-node instance from a plurality of instances carried by a same server, and deliver different control parameters to different instances to adjust objects to which different instances initiate configuration requests. That is, common instances within the server initiates a configuration updating request only to the representative-of-node instance, and the representative-of-node instance initiates a configuration updating request only to the representative-of-node instance. Therefore, only the representative-of-node instance will initiate a configuration updating request to a console. That is, an initiating object is transferred, thus greatly reducing the number of requests processed by the console, and a smaller number of processed requests will also shorten a waiting time for processing and a time required for the new configuration to take effect.

It should be understood that contents described in the SUMMARY are neither intended to identify key or important features of embodiments of the present disclosure, nor intended to limit the scope of the present disclosure. Other features of the present disclosure will become readily understood with reference to the following description.

### BRIEF DESCRIPTION OF THE DRAWINGS

After reading detailed descriptions of non-limiting embodiments with reference to the following accompanying drawings, other features, objectives, and advantages of the present disclosure will become more apparent.
Fig. 1 is an exemplary system architecture in which embodiments of the present disclosure may be implemented;
Fig. 2 is a flowchart of a method for updating an instance configuration provided in an embodiment of the present disclosure;
Fig. 3 is another flowchart of the method for updating an instance configuration provided in another embodiment of the present disclosure;
Fig. 4 is a structural block diagram of an apparatus for updating an instance configuration provided in an embodiment of the present disclosure; and
Fig. 5 is a schematic structural diagram of an electronic device adapted to executing the method for updating an instance configuration provided in embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here without departing from the scope and spirit of the present disclosure. Similarly, for clearness and conciseness, descriptions of well-known functions and structures are omitted in the following description. It should be noted that the embodiments in the present disclosure and the features in the embodiments may be combined with each other on a non-conflict basis.

In the technical solution of the present disclosure, the collection, storage, use, processing, transfer, provision, and disclosure of personal information of a user involved are in conformity with relevant laws and regulations, and do not violate public order and good customs.

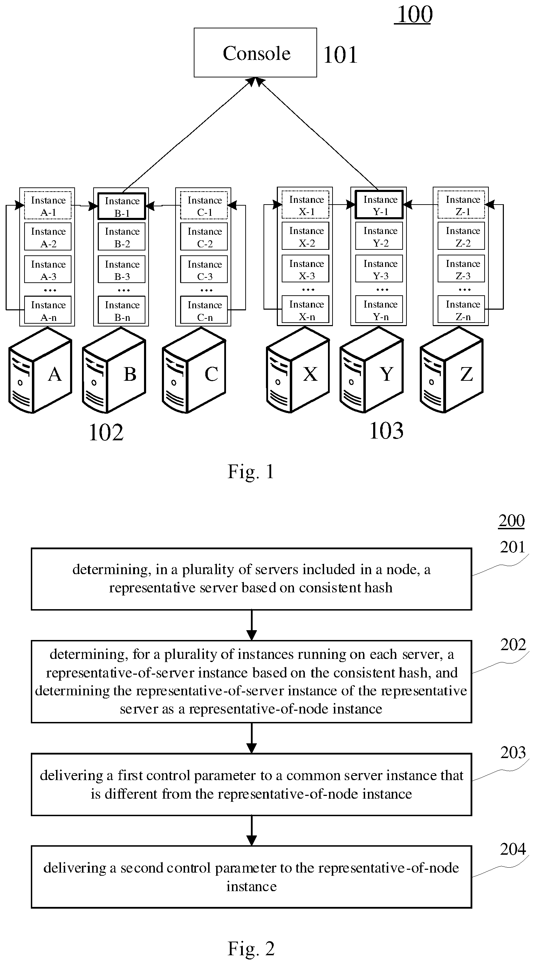

Fig. 1 shows an exemplary system architecture 100 in which a method and apparatus for updating an instance configuration, an electronic device, and a computer readable storage medium of embodiments of the present disclosure may be implemented.

As shown in Fig. 1, the system architecture 100 may be a CDN including a plurality of nodes, e.g., including a console 101, a first node 102, and a second node 103 (other possible nodes are not shown one by one). The first node 102 and the second node 102 each includes 3 servers, i.e., the first node includes servers A, B, and C, and the second node 103 includes servers X, Y, and Z. The 6 servers carry n instances, which are named as "server name-1~n" respectively.

Various applications may be installed on each node and each server to implement various functions, such as a representative selecting application for determining a representative-of-server instance among instances within the server and for determining a representative server among the servers in a node, a data transmitting application for data communication among the instances, and an instant messaging application.

The console 101, the first node 102, the second node 103, and a plurality of servers included in the node may be hardware, or may be software. When they are hardware, they may be implemented as a distributed server cluster composed of a plurality of servers, or may be implemented as a single server. When they are software, they may be implemented as a plurality of software programs or software modules, or may be implemented as a single software program or software module. This is not specifically limited here.

In order to clarify an object to which each instance initiates configuration updating, each server may run the representative selecting application to achieve the following technical effects: first, determining, for the plurality of servers included in the node, a representative server (for example, the server B in the first node 102 or the server Y in the second node 103 in Fig. 1) based on consistent hash; then, determining, for a plurality of instances running on each server, a representative-of-server instance (for example, the instance A-1 and the instance C-1 in the first node 102 and the instance X-1 and the instance Z-1 in the second node 103 in Fig. 1) based on the consistent hash, and determining the representative-of-server instance of the representative server as a representative-of-node instance (for example, the instance B-1 in the first node 102 and the instance Y-1 in the second node 103 in Fig. 1); and then, delivering a first control parameter to a common server instance that is different from the representative-of-server instance, and delivering a second control parameter to the representative-of-server instance.

Further, after the first control parameter is delivered to the common server instance, the common server instance will initiate a configuration updating request only to a representative-of-server instance in the same server based on the effective first control parameter; and after the second control parameter is delivered to the representative-of-server instance, the representative-of-server instance will initiate a configuration updating request only to a representative-of-node instance based the effective second control parameter. The representative-of-node instance will still initiate a configuration updating request to the console based on a default control parameter, thus adjusting an initiating object of the configuration updating request rather than setting the initiating object only as the console.

It should be understood that the numbers of consoles, nodes, servers, and instances in Fig. 1 are merely illustrative. Any number of consoles, nodes, servers, and instances may be provided based on actual requirements.

Referring to Fig. 2, Fig. 2 is a flowchart of a method for updating an instance configuration provided in an embodiment of the present disclosure, where the process 200 includes the following step 201 to step 204.

Step 201: determining, in a plurality of servers included in a node, a representative server based on consistent hash.

This step is intended to determine, by an executing body (e.g., any server in nodes shown in Fig. 1) of the method for updating an instance configuration, a representative server for representing the node in the plurality of servers in the node based on the consistent hash.

In a consistent hash algorithm, an entire hash value space is mapped into a virtual circular ring, and a value range of the entire hash value space is from 0 to 2³²-1. The entire hash space is organized clockwise. The direction from 0 to 2³²-1 superposes at a zero point. Then, a service request is mapped using the following algorithm. Here, a corresponding hash value of the service request is calculated using the hash algorithm. Then, retrieving is performed along the circular ring clockwise based on a position of the hash value, and a first encountered server is a corresponding request processing server. When a new server is added, affected data is only data between the newly added server and a previous server in its ring space (i.e., a first server encountered in the counterclockwise direction), and other data will not be affected. To sum up, in the consistent hash algorithm, it is only required to re-position a small portion of data in the ring space in the increase or decrease of a node, and a good fault tolerance and scalability are obtained.

Step 202: determining, for a plurality of instances running on each server, a representative-of-server instance based on the consistent hash, and determining the representative-of-server instance of the representative server as a representative-of-node instance.

Based on step 201, this step is intended to determine, by the executing body, the representative-of-server instance representing each server among the plurality of instances of the server based on the consistent hash, and determine the representative-of-node instance of the representative server as the representative-of-node instance. That is, the representative-of-node instance in the representative server is relative to other instances within the representative server, and the representative-of-node instance is relative to the representative-of-node instance of other servers in the node.

Different from the approach of determining the representative server based on the consistent hash, it is only required to modify the number of servers that form the hash ring to the number of instances to determine the representative-of-node instances, and it is also required, in calculating the hash value based on the service request, to modify to an instance-related request or other parameters.

Step 203: delivering a first control parameter to a common server instance that is different from the representative-of-node instance.

Based on step 202, this step is intended to deliver, by the executing body, the first control parameter to the first server instance that is different from the representative-of-node instance, such that the first server instance initiates a configuration updating request only to a representative-of-node instance of a same server under the guidance of the effective first control parameter. That is, it is understandable that: the first control parameter is used for instructing to adjust the initiating object of the configuration updating request of the common server instance to the representative-of-node instance of the same server, instead of the console.

Step 204: delivering a second control parameter to the representative-of-node instance.

Based on step 202, this step is intended to deliver, by the executing body, the second control parameter to the representative-of-node instance, such that the representative-of-node instance initiates a configuration updating request only to the representative-of-node instance under the guidance of the effective second control parameter. That is, it is understandable that: the second control parameter is used for instructing to adjust the initiating object of the configuration updating request of the representative-of-node instance to the representative-of-node instance within the representative server, instead of the console.

The method for updating an instance configuration provided in the embodiment of the present disclosure selects a representative server from a plurality of servers included in each CDN node based on consistent hash, selects a representative-of-node instance and a representative-of-node instance from a plurality of instances carried in a same server, and delivers different control parameters to different instances to adjust objects to which different instances initiate configuration requests, i.e., a common instance within the server initiates a configuration updating request only to the representative-of-node instance, and the representative-of-node instance initiates a configuration updating request only to the representative-of-node instance. Therefore, only the representative-of-node instance will initiate a configuration updating request to a console. That is, the initiating object is transferred to greatly reduce the number of requests processed by the console, and the smaller number of processed requests will also shorten the waiting time consumed for processing and the time required for the new configuration to take effect.

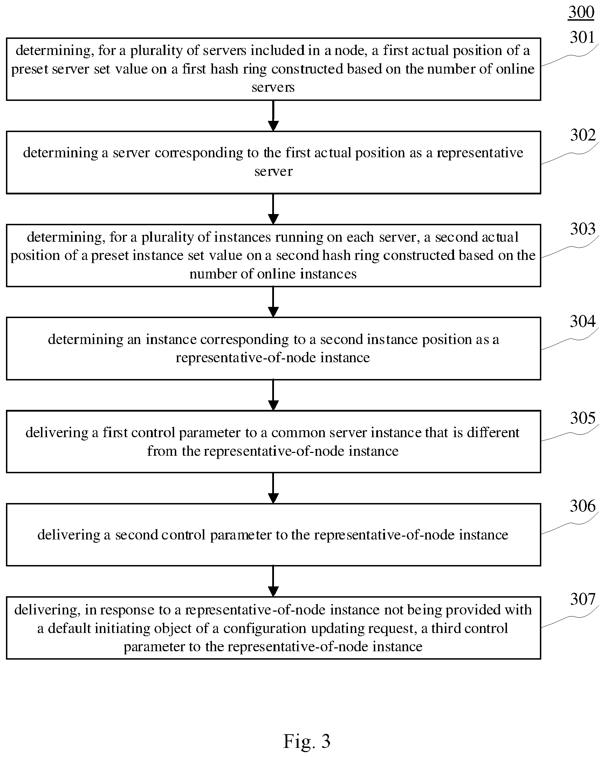

Referring to Fig. 3, Fig. 3 is another flowchart of the method for updating an instance configuration provided in an embodiment of the present disclosure, where the process 300 includes the following steps 301 to step 307.

Step 301: determining, for a plurality of servers included in a node, a first actual position of a preset server set value on a first hash ring constructed based on the number of online servers.

Step 302: determining a server corresponding to the first actual position as a representative server.

For the generic solution provided in step 201, the present embodiment provides a specific implementation solution in step 301 to step 302, i.e., determining the first actual position of the preset server set value on the first hash ring constructed based on the number of online servers. With this approach, the same first actual position will be kept based on the same server set value when the number of online servers remains unchanged, then the same representative server will be determined each time, and the consistency of the representative server will avoid as far as possible information being acquired by other non-representative servers from the representative server, thereby contributing to maintaining latest configuration.

Step 303: determining, for a plurality of instances running on each server, a second actual position of a preset instance set value on a second hash ring constructed based on the number of online instances.

Step 304: determining an instance corresponding to a second instance position as a representative-of-node instance.

For the generic solution provided in step 202, the present embodiment provides a specific implementation solution in step 303 to step 304, i.e., determining the second actual position of the preset instance set value on the second hash ring constructed based on the number of online instances. Similar to step 301 to step 302, except that the representative object is changed from the server to the instance, it is also necessary to realize a consistency of the representative instance based on different set values.

It should be noted that if the representative server or representative instance goes offline due to an abnormality, the hash ring will determine another server or another instance as a new representative server or a new representative instance due to the number change under the same set value, which can also achieve a replacement of the representative server or representative instance. If the representative server or representative instance that goes offline due to the abnormality comes online again, the representative server or representative instance will be re-determined as the representative server or representative instance based on the same set value, and then achieve the consistency of the representative server and representative instance, thereby contributing to maintaining the latest configuration.

Step 305: delivering a first control parameter to a common server instance that is different from the representative-of-node instance.

Step 306: delivering a second control parameter to the representative-of-node instance.

The above steps 305 to 306 are consistent with the steps 203 to 204 shown in Fig. 2, and corresponding portions of the above embodiment may be referred to for contents of identical portions. The description will not be repeated here.

Step 307: delivering, in response to a representative-of-node instance not being provided with a default initiating object of a configuration updating request, a third control parameter to the representative-of-node instance.

This step is intended to, for a circumstance where the representative-of-node instance is not provided with the default initiating object of the configuration updating request (the circumstance generally occurs prior to first configuration of a control parameter of each node within a CDN, i.e., a current representative-of-node instance is not provided with the default initiating object), deliver a third control parameter to the representative-of-node instance, i.e., the third control parameter is used for instructing the representative-of-node instance to initiate the configuration updating request only to a console.

Different from the process 200, the present embodiment provides an implementation solution of maintaining the representative server or representative instance based on a fixed set value in step 301 to step 302 and step 303 to step 304, to avoid the problem caused by frequent changes of the representative server or the representative instance based on a dynamic set value; and meanwhile, a circumstance where the node has not been provided with a control parameter for a first time is also considered in step 307, and the third control parameter is delivered, such that the representative node delivers initiates the configuration updating request only to the console, and further, when the representative node delivers acquires latest configuration from the console, other delivers s will be able to acquire the latest configuration successively based on the first control parameter and the second control parameter.

It should be understood that there is no causality or dependence between step 301 to step 302, step 303 to step 304, and step 307, which may be completely combined with the process 200 to form different embodiments, and the present embodiment only serves as a preferred embodiment that includes the above three preferred implementation solutions.

Based on any of the above embodiments, for a circumstance where the number of servers included in the node exceeds a preset first number threshold (i.e., the number of servers is large), the number of representative-of-node instances may be increased by increasing the number of representative servers or increasing the number of representative-of-node instances within the representative server, and a working mode of a plurality of representative-of-node instances may be set as a master-slave mode to guarantee normal working. That is, the number of representative-of-node instances is increased, to prevent a single representative-of-node instance from bearing very high request processing pressure.

Likewise, for a circumstance where the number of instances running on a server exceeds a preset second number threshold (i.e., the number of instances is large), the number of representative-of-server instances within each server may be further increased, and a working mode of a plurality of representative-of-node instances may be set as a master-slave mode to guarantee normal working. That is, the number of representative-of-node instances is increased, to prevent a single representative-of-node instance from bearing very high request processing pressure.

To deepen understanding, the present disclosure further provides a specific implementation solution in combination with a specific application scenario. Please refer to Fig. 1.
1) A server B in a first node is determined as a first representative server and a server Y in a second node is determined as a second representative server by consistent hash based on a server set value.
2) An instance No. 1 in each server is determined as a representative-of-node instance by consistent hash based on the instance set value, the rest instances within the server is determined as common server instances, a representative-of-node instance No. 1 of the first representative server is determined as a first representative-of-node instance, and a representative-of-node instance No. 1 of the second representative server is determined as a second representative-of-node instance.
3) The first control parameter is delivered to the common server instances, the second control parameter is delivered to the representative-of-node instance, and the third control parameter is delivered to the representative-of-node instance.
4) The common server instance initiates a configuration updating request to the representative-of-node instance based on the effective first control parameter, the representative-of-node instance under the same node initiates a configuration updating request to the representative-of-node instance based on the effective second control parameter, and a representative-of-node instance of each node initiates a configuration updating request to a console of the CDN based on the effective third control parameter.

After the above adjustment, the number of requests to be processed by the console in a unit of time will be reduced from an order of magnitude of hundreds of thousands to an order of magnitude of hundreds, thereby greatly reducing the configuration request interval of the representative node instance, and shortening the time required for the new configuration to take effect on the CDN.

Further, the console may deliver the configuration file by delivering the latest configuration file itself and a timestamp. When sending a configuration-pulling request, a CDN instance will carry a timestamp of its own configuration. The console compares the timestamp carried in the request with the timestamp of the current latest configuration. The console will directly return a status code 304 to indicate that the CDN instance already has the latest configuration if the timestamp carried in the request is identical to the timestamp of the current latest configuration. If the timestamp in the request is less than the timestamp of the current latest configuration, which means that the counterpart has an old version of configuration, the console will find the configuration version owned by the request sender based on the old timestamp, compute a file difference between the latest version of configuration and the old version of configuration based on a difference algorithm, and deliver a difference description file (generally much smaller than the configuration file itself) to the requester. After obtaining the difference description file, the requester performs an updating operation based on a local old version of configuration file, to obtain the latest configuration file for configuration, i.e., reducing a size of transmitted data by incremental updating.

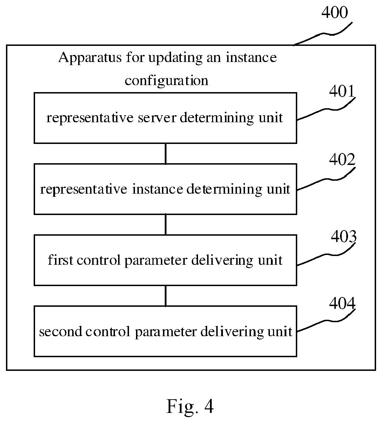

Further referring to Fig. 4, as an implementation of the method shown in the above figures, an embodiment of the present disclosure provides an apparatus for updating an instance configuration. The embodiment of the apparatus corresponds to the embodiment of the method shown in Fig. 2, and the apparatus may be specifically applied to various electronic devices.

As shown in Fig. 4, the apparatus 400 for updating an instance configuration in the present embodiment may include: a representative server determining unit 401, a representative instance determining unit 402, a first control parameter delivering unit 403, and a second control parameter delivering unit 404. The representative server determining unit 401 is configured to determine, for a plurality of servers included in a node, a representative server based on consistent hash; the representative instance determining unit 402 is configured to determine, for a plurality of instances running on each server, a representative-of-server instance based on the consistent hash, and determine the representative-of-server instance of the representative server as a representative-of-node instance; the first control parameter delivering unit 403 is configured to deliver a first control parameter to a common server instance that is different from the representative-of-server instance; where the first control parameter is used for instructing the common server instance to initiate a configuration updating request only to a representative-of-server instance of a same server; and the second control parameter delivering unit 404 is configured to deliver a second control parameter to the representative-of-server instance; where the second control parameter is used for instructing the representative-of-server instance to initiate a configuration updating request only to the representative-of-node instance.

The related description of steps 201 to 204 in the corresponding embodiment of Fig. 2 may be referred to for specific processing of the representative server determining unit 401, the representative instance determining unit 402, the first control parameter delivering unit 403, and the second control parameter delivering unit 404 in the apparatus 400 for updating an instance configuration in the present embodiment and the technical effects thereof, respectively. The description will not be repeated here.

In some optional implementations of the present embodiment, the apparatus 400 for updating an instance configuration may further include:
a third control parameter delivering unit configured to deliver, in response to the representative-of-node instance not being provided with a default initiating object of a configuration updating request, a third control parameter to the representative-of-node instance, where the third control parameter is used for instructing the representative-of-node instance to initiate the configuration updating request only to a console.

In some optional implementations of the present embodiment, the representative server determining unit 401 may be further configured to:
determine, for the plurality of servers included in the node, a first actual position of a preset server set value on a first hash ring constructed based on the number of online servers; and
determine a server corresponding to the first actual position as the representative server.

In some optional implementations of the present embodiment, the representative instance determining unit 402 may include a representative-of-server instance determining subunit configured to determine, for the plurality of instances running on each server, the representative-of-server instance based on the consistent hash. The representative-of-server instance determining subunit may be further configured to:
determine, for the plurality of instances running on the servers, a second actual position of a preset instance set value on a second hash ring constructed based on a number of online instances; and
determine an instance corresponding to the second instance position as the representative-of-server instance.

In some optional implementations of the present embodiment, the apparatus 400 for updating an instance configuration may further include:
a representative-of-node instance increasing unit configured to increase, in response to a number of servers included in the node exceeding a preset first number threshold, a number of representative-of-node instances by increasing a number of representative servers or increasing a number of representative-of-server instances within the representative server; and
a representative-of-node instance working mode setting unit configured to set a working mode of a plurality of the representative-of-node instances as a master-slave mode.

In some optional implementations of the present embodiment, the apparatus 400 for updating an instance configuration may further include:
a representative-of-server instance increasing unit configured to increase, in response to a number of instances running on a server exceeding a preset second number threshold, a number of representative-of-server instances within the server; and
a representative-of-server instance working mode setting unit configured to set a working mode of a plurality of the representative-of-server instances within the server as a master-slave mode.

The present embodiment is provided as an apparatus embodiment corresponding to the above method embodiment. The apparatus for updating an instance configuration provided in the present embodiment selects a representative server from a plurality of servers included in each CDN node based on consistent hash, selects a representative-of-server instance and a representative-of-node instance from a plurality of instances carried in a same server, and delivers different control parameters to different instances to adjust objects to which different instances initiate configuration requests, i.e., a common instance within the server initiates a configuration updating request only to the representative-of-server instance, and the representative-of-server instance initiates a configuration updating request only to the representative-of-node instance. Therefore, only the representative-of-node instance will initiate a configuration updating request to a console. That is, an initiating object is transferred, thus greatly reducing the number of requests processed by the console, and a smaller number of processed requests will also shorten a waiting time for processing and a time required for the new configuration to take effect.

According to an embodiment of the present disclosure, the present disclosure further provides an electronic device, including: at least one processor; and a memory communicatively connected to the at least one processor; where the memory stores instructions executable by the at least one processor, and the instructions are executed by the at least one processor, such that the at least one processor can implement the method for updating an instance configuration according to any one of the above embodiments.

According to an embodiment of the present disclosure, the present disclosure further provides a readable storage medium storing computer instructions, where the computer instructions are used for causing a computer to implement the method for updating an instance configuration according to any one of the above embodiments.

According to an embodiment of the present disclosure, the present disclosure further provides a computer program product, where the computer program, when executed by a processor, can implement the method for updating an instance configuration according to any one of the above embodiments.

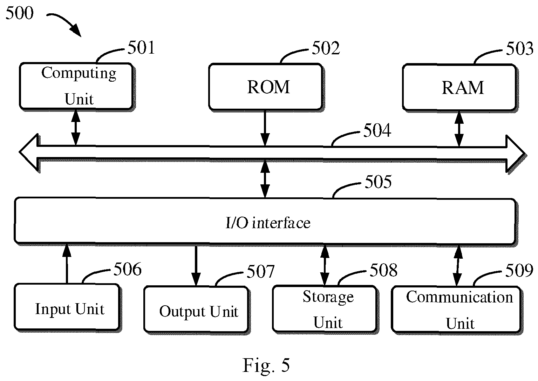

Fig. 5 shows a schematic block diagram of an exemplary electronic device 500 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may further represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 5, the device 500 includes a computing unit 501, which may execute various appropriate actions and processes in accordance with a computer program stored in a read-only memory (ROM) 502 or a computer program loaded into a random-access memory (RAM) 503 from a storage unit 508. The RAM 503 may further store various programs and data required by operations of the device 500. The computing unit 501, the ROM 502, and the RAM 503 are connected to each other through a bus 504. An input/output (I/O) interface 505 is also connected to the bus 504.

A plurality of components in the device 500 is connected to the I/O interface 505, including: an input unit 506, such as a keyboard and a mouse; an output unit 507, such as various types of displays and speakers; a storage unit 508, such as a magnetic disk and an optical disk; and a communication unit 509, such as a network card, a modem, and a wireless communication transceiver. The communication unit 509 allows the device 500 to exchange information/data with other devices via a computer network such as the Internet and/or various telecommunication networks.

The computing unit 501 may be various general-purpose and/or special-purpose processing components having a processing power and a computing power. Some examples of the computing unit 501 include, but are not limited to, a central processing unit (CPU), a graphics processing unit (GPU), various special-purpose artificial intelligence (AI) computing chips, various computing units running a machine learning model algorithm, a digital signal processor (DSP), and any appropriate processor, controller, micro-controller, and the like. The computing unit 501 executes various methods and processes described above, such as the method for updating an instance configuration. For example, in some embodiments, the method for updating an instance configuration may be implemented as a computer software program that is tangibly included in a machine-readable medium, such as the storage unit 508. In some embodiments, some or all of the computer programs may be loaded and/or installed onto the device 500 via the ROM 502 and/or the communication unit 509. When the computer program is loaded into the RAM 503 and executed by the computing unit 501, one or more steps of the method for updating an instance configuration described above may be executed. Alternatively, in other embodiments, the computing unit 501 may be configured to execute the method for updating an instance configuration by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data and instructions from, and transmit data and instructions to, a storage system, at least one input apparatus, and at least one output apparatus.

Program codes for implementing the method of the present disclosure may be compiled using any combination of one or more programming languages. The program codes may be provided to a processor or controller of a general-purpose computer, a special-purpose computer, or other programmable data processing apparatuses, such that the program codes, when executed by the processor or controller, cause the functions/operations specified in the flow charts and/or block diagrams to be implemented. The program codes may be completely executed on a machine, partially executed on a machine, partially executed as a separate software package on a machine and partially executed on a remote machine, or completely executed on a remote machine or server.

In the context of the present disclosure, the machine-readable medium may be a tangible medium which may contain or store a program for use by, or used in combination with, an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may be further configured to provide interaction with the user. For example, a feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, is also known as a cloud computing server or a cloud host, and is a host product in a cloud computing service system to solve the defects of difficult management and weak service extendibility existing in conventional physical hosts and virtual private servers (VPS).

The technical solutions according to the embodiments of the present disclosure select a representative server from a plurality of servers included in each CDN node based on consistent hash, select a representative-of-server instance and a representative-of-node instance from a plurality of instances carried in a same server, and deliver different control parameters to different instances to adjust objects to which different instances initiate configuration requests, i.e., a common instance within the server initiates a configuration updating request only to the representative-of-server instance, and the representative-of-server instance initiates a configuration updating request only to the representative-of-node instance. Therefore, only the remaining representative-of-node instance will initiate a configuration updating request to a console, i.e., transferring the initiating object to greatly reduce the number of requests processed by the console, and the smaller number of processed requests will also shorten the time consumption required to wait for processing and the time consumption required for the new configuration to take effect.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for updating an instance configuration, comprising:
determining (201), for a plurality of servers included in a node, a representative server based on consistent hash;
determining (202), for a plurality of instances running on each server, a representative-of-server instance based on the consistent hash, and determining the representative-of-server instance of the representative server as a representative-of-node instance;
delivering (203) a first control parameter to a common server instance that is different from the representative-of-server instance, wherein the first control parameter is used for instructing the common server instance to initiate a configuration updating request only to a representative-of-server instance of a same server; and
delivering (204) a second control parameter to the representative-of-server instance, wherein the second control parameter is used for instructing the representative-of-server instance to initiate a configuration updating request only to the representative-of-node instance.

2. The method according to claim 1, wherein the method further comprises:
delivering (307), in response to the representative-of-node instance not being provided with a default initiating object of a configuration updating request, a third control parameter to the representative-of-node instance, wherein the third control parameter is used for instructing the representative-of-node instance to initiate the configuration updating request only to a console.

3. The method according to claim 1 or 2, wherein the determining, for the plurality of servers included in the node, the representative server based on the consistent hash comprises:
determining (301), for the plurality of servers included in the node, a first actual position of a preset server set value on a first hash ring constructed based on a number of online servers; and
determining (302) a server corresponding to the first actual position as the representative server.

4. The method according to any one of claims 1 to 3, wherein the determining, for the plurality of instances running on each server, the representative-of-server instance based on the consistent hash comprises:
determining (303), for the plurality of instances running on the server, a second actual position of a preset instance set value on a second hash ring constructed based on a number of online instances; and
determining (304) an instance corresponding to the second instance position as the representative-of-server instance.

5. The method according to any one of claims 1 to 4, wherein the method further comprises:
increasing, in response to a number of servers included in the node exceeding a preset first number threshold, a number of representative-of-node instances by increasing a number of representative servers or increasing a number of representative-of-server instances within the representative server; and
setting a working mode of a plurality of the representative-of-node instances as a master-slave mode.

6. The method according to any one of claims 1 to 4, wherein the method further comprises:
increasing, in response to a number of instances running on a server exceeding a preset second number threshold, a number of representative-of-server instances within the server; and
setting a working mode of a plurality of the representative-of-server instances within the server as a master-slave mode.

7. An apparatus for updating an instance configuration, comprising:
a representative server determining unit (401) configured to determine, for a plurality of servers included in a node, a representative server based on consistent hash;
a representative instance determining unit (402) configured to determine, for a plurality of instances running on each server, a representative-of-server instance based on the consistent hash, and determine the representative-of-server instance of the representative server as a representative-of-node instance;
a first control parameter delivering unit (403) configured to deliver a first control parameter to a common server instance that is different from the representative-of-server instance, wherein the first control parameter is used for instructing the common server instance to initiate a configuration updating request only to a representative-of-server instance of a same server; and
a second control parameter delivering unit (404) configured to deliver a second control parameter to the representative-of-server instance, wherein the second control parameter is used for instructing the representative-of-server instance to initiate a configuration updating request only to the representative-of-node instance.

8. The apparatus according to claim 7, wherein the apparatus further comprises:
a third control parameter delivering unit configured to deliver, in response to the representative-of-node instance not being provided with a default initiating object of a configuration updating request, a third control parameter to the representative-of-node instance, wherein the third control parameter is used for instructing the representative-of-node instance to initiate the configuration updating request only to a console.

9. The apparatus according to claim 7 or 8, wherein the representative server determining unit is further configured to:
determine, for the plurality of servers included in the node, a first actual position of a preset server set value on a first hash ring constructed based on a number of online servers; and
determine a server corresponding to the first actual position as the representative server.

10. The apparatus according to any one of claims 7 to 9, wherein the representative instance determining unit comprises a representative-of-server instance determining subunit configured to determine, for the plurality of instances running on each server, the representative-of-server instance based on the consistent hash, and the representative-of-server instance determining subunit is further configured to:
determine, for the plurality of instances running on the servers, a second actual position of a preset instance set value on a second hash ring constructed based on a number of online instances; and
determine an instance corresponding to the second instance position as the representative-of-server instance.

11. The apparatus according to any one of claims 7 to 10, wherein the apparatus further comprises:
a representative-of-node instance increasing unit configured to increase, in response to a number of servers included in the node exceeding a preset first number threshold, a number of representative-of-node instances by increasing a number of representative servers or increasing a number of representative-of-server instances within the representative server; and
a representative-of-node instance working mode setting unit configured to set a working mode of a plurality of the representative-of-node instances as a master-slave mode.

12. The apparatus according to any one of claims 7 to 10, wherein the apparatus further comprises:
a representative-of-server instance increasing unit configured to increase, in response to a number of instances running on a server exceeding a preset second number threshold, a number of representative-of-server instances within the server; and
a representative-of-server instance working mode setting unit configured to set a working mode of a plurality of the representative-of-server instances within the server as a master-slave mode.

13. A system for processing a request, comprising:
a representative selecting and control parameter delivering apparatus configured to determine, for a plurality of servers included in a node, a representative server based on consistent hash; determine, for a plurality of instances running on each server, a representative-of-server instance based on the consistent hash, and determine the representative-of-server instance of the representative server as a representative-of-node instance; deliver a first control parameter to a common server instance that is different from the representative-of-server instance; and deliver a second control parameter to the representative-of-server instance, wherein
the common server instance is used for initiating a configuration updating request only to a representative-of-server instance of a same server based on the received first control parameter; and
the representative-of-server instance is used for initiating a configuration updating request only to the representative-of-node instance based on the received second control parameter.

14. A non-transitory computer readable storage medium storing computer instructions, wherein the computer instructions are used for causing the computer to execute the method for updating an instance configuration according to any one of claims 1 to 6.

15. A computer program product, comprising a computer program, wherein the computer program, when executed by a processor, implements steps of the method for updating an instance configuration according to any one of claims 1 to 6.
